# FASCICULE DE BREVET EUROPEEN

(11) **EP 4 323 220 B1**
(45) Date de publication et mention de la délivrance du brevet: **25.12.2024**
(21) Numéro de dépôt: 22712981.4
(22) Date de dépôt: 09.03.2022
(51) Int. Cl.: B60K 11/08, B62D 21/15

(54) **DISPOSITIF DE CANALISATION D'AIR À ÉLÉMENT DE CLIPPAGE, POUR UNE POUTRE AVANT D'UN VÉHICULE TERRESTRE**
LUFTLEITUNGSEINRICHTUNG MIT CLIP-ELEMENT FÜR EINEN FRONTTRÄGER EINES LANDFAHRZEUGS
AIR DUCTING DEVICE WITH CLIP-ON ELEMENT FOR A FRONT BEAM OF A LAND VEHICLE

(30) Priorité: 14.04.2021 FR 2103868
(43) Date de publication de la demande: 21.02.2024
(73) Titulaire: Stellantis Auto SAS, 78300 Poissy (FR)
(72) Inventeur: BOUDAN, Julien, 91210 DRAVEIL (FR); PERON, Rodolphe, 95220 HERBLAY (FR); ROYER, Guillaume, 91680 BRUYERES LE CHATEL (FR)
(74) Mandataire: BCIP
(86) Numéro de dépôt international: PCT/FR2022/050422
(87) Numéro de publication internationale: WO 2022/219257

(56) Documents cités:
- EP-A1- 2 423 024
- WO-A1-2013/014347
- US-A1- 2018 072 151

## Description

### Domaine technique de l'invention

L'invention concerne les véhicules terrestres, et plus précisément les dispositifs de canalisation d'air qui équipent certaines poutres avant faisant partie des parties avant de tels véhicules.

### Etat de la technique

Certains véhicules terrestres, généralement de type automobile, comprennent une partie avant comportant une poutre avant installée transversalement et à laquelle est généralement solidarisé fixement un pare-chocs avant ou un bouclier avant. Cette poutre avant est conçue de manière à encaisser (ou absorber) de façon réglementaire des chocs au moins partiellement longitudinaux subis par l'avant par son véhicule (terrestre).

Parfois, l'extrémité droite ou gauche de la poutre avant doit servir de zone de solidarisation pour un dispositif de canalisation d'air comportant des parois délimitant un conduit de canalisation d'air chargé d'alimenter en air au moins un équipement du véhicule, comme par exemple un échangeur de chaleur.

La solidarisation du dispositif de canalisation d'air à l'une des extrémités de la poutre avant se fait généralement par vissage via au moins un trou dédié qui est défini exprès dans cette extrémité. L'inconvénient de la définition d'un tel trou dédié réside dans le fait qu'il induit localement dans son extrémité une zone d'affaiblissement (ou amorce de rupture) qui réduit sa capacité à encaisser (ou absorber) des chocs et donc empêche la poutre avant de satisfaire totalement aux règles de sécurité en vigueur. En outre, l'utilisation de vis et la réalisation de trou(s) dédié(s) induit un surcoût.

Un dispositif de canalisation d'air est connu du document WO 2013/014347 A1.

L'invention a donc notamment pour but de remédier à au moins l'un des inconvénients précités.

### Présentation de l'invention

Elle propose notamment à cet effet un dispositif de canalisation d'air propre à être couplé à une extrémité droite ou gauche d'une poutre avant d'un véhicule terrestre, et comportant des parois délimitant un conduit de canalisation d'air.

Ce dispositif de canalisation d'air se caractérise par le fait que l'une de ses parois comprend un élément de clippage propre à être introduit et clippé dans un trou traversant que comprend l'extrémité concernée et qui est dédié au passage d'une vis vers l'embase d'un pied droit ou gauche de la poutre avant, située en retrait, en vue de sa solidarisation à la structure du véhicule. Grâce à ce clippage dans un trou d'une extrémité d'une poutre avant ayant une autre fonction première (passage de vis), on peut désormais coupler le dispositif de canalisation d'air sans utiliser de vis et sans qu'il faille définir un trou dédié supplémentaire dans cette extrémité.

Le dispositif de canalisation d'air selon l'invention peut comporter d'autres caractéristiques qui peuvent être prises séparément ou en combinaison, et notamment :
- l'élément de clippage peut comprendre au moins deux pattes destinées à traverser le trou traversant correspondant, et parmi lesquelles une première patte est flexible et comprend un cran propre à assurer un clippage derrière ce trou traversant et une deuxième patte est située en regard de cette première patte, en étant décalée par rapport à cette dernière d'un secteur angulaire de 180°, et assure un guidage lors de la traversée ;
- en présence de la première option, l'élément de clippage peut comprendre une troisième patte décalée par rapport à la première patte d'un secteur angulaire compris entre 30° et 150°, destinée à traverser le trou traversant correspondant et propre à assurer un guidage lors de la traversée ;
- en présence de la première option, l'élément de clippage peut comprendre une quatrième patte décalée par rapport à la première patte d'un secteur angulaire compris entre -30° et -150°, destinée à traverser le trou traversant correspondant et propre à assurer un guidage lors de la traversée ;
- en présence des deux dernières sous-options, l'une au moins des troisième et quatrième pattes peut être flexible ;
- la paroi concernée peut comprendre une patte de fixation comportant une face arrière comprenant l'élément de clippage ;
- il peut être réalisé par moulage par injection d'une matière plastique. L'invention propose également une poutre avant propre à être installée transversalement dans une partie avant d'un véhicule terrestre, et comprenant des pieds droit et gauche munis chacun d'une embase destinée à être solidarisée fixement par vissage à une structure du véhicule, et des extrémités droite et gauche comportant chacune un trou traversant dédié au passage d'une vis vers l'embase correspondante, située en retrait, en vue de sa solidarisation à la structure.

Cette poutre avant se caractérise par le fait qu'elle comprend aussi un dispositif de canalisation d'air du type de celui présenté ci-avant et clippé dans un trou traversant correspondant de l'une de ses deux extrémités.

Par exemple, cette poutre avant peut comprendre une pièce principale propre à être installée transversalement dans la partie avant du véhicule et comprenant des parties terminales auxquelles sont solidarisés les pieds. Dans ce cas, chaque extrémité peut être une pièce qui est rapportée sur l'une des parties terminales de la pièce principale.

L'invention propose également un véhicule terrestre, éventuellement de type automobile, et comprenant une partie avant comportant une poutre avant du type de celle présentée ci-avant.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »)), sur lesquels :
[Fig. 1] illustre schématiquement, dans une vue de face du côté avant, un exemple de réalisation d'une poutre avant comprenant un exemple de réalisation d'un dispositif de canalisation d'air selon l'invention et avant d'équiper une partie avant d'un véhicule,
[Fig. 2] illustre schématiquement, dans une vue en perspective du côté avant, l'extrémité droite de la poutre avant de la figure 1 à laquelle est solidarisé le dispositif de canalisation d'air,
[Fig. 3] illustre schématiquement, dans une vue en perspective du côté de la face arrière, la patte de fixation du dispositif de canalisation d'air de la figure 1 avant son clippage dans un trou traversant de l'extrémité droite de la poutre avant,
[Fig. 4] illustre schématiquement, dans une vue en perspective du côté de la face arrière, la patte de fixation du dispositif de canalisation d'air de la figure 1 après son clippage dans un trou traversant de l'extrémité droite de la poutre avant,
[Fig. 5] illustre schématiquement, dans une vue en coupe dans un plan vertical et longitudinal, la poutre avant de la figure 1, et
[Fig. 6] illustre schématiquement, dans une vue en coupe dans un plan horizontal, la patte de fixation de la figure 1 une fois son élément de clippage clippé dans un trou traversant de l'extrémité droite de la poutre avant.

### Description détaillée de l'invention

L'invention a notamment pour but de proposer un dispositif de canalisation d'air DC propre à être couplé à une extrémité Ej droite ou gauche d'une poutre avant PV d'un véhicule terrestre, sans vis et sans définition d'un trou dédié.

Dans ce qui suit, on considère, à titre d'exemple non limitatif, que la poutre avant PV est destinée à faire partie d'un véhicule de type automobile, comme par exemple une voiture. Mais l'invention n'est pas limitée à ce type de véhicule terrestre. Elle concerne en effet tout véhicule terrestre comprenant une partie avant comportant une poutre avant destinée à encaisser (ou absorber) des chocs au moins partiellement longitudinaux subis par l'avant.

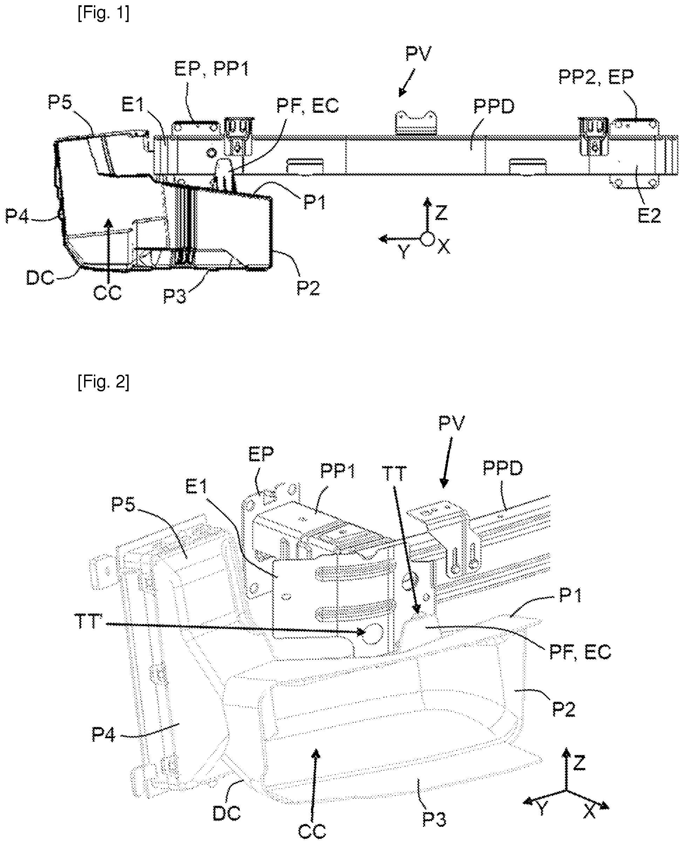

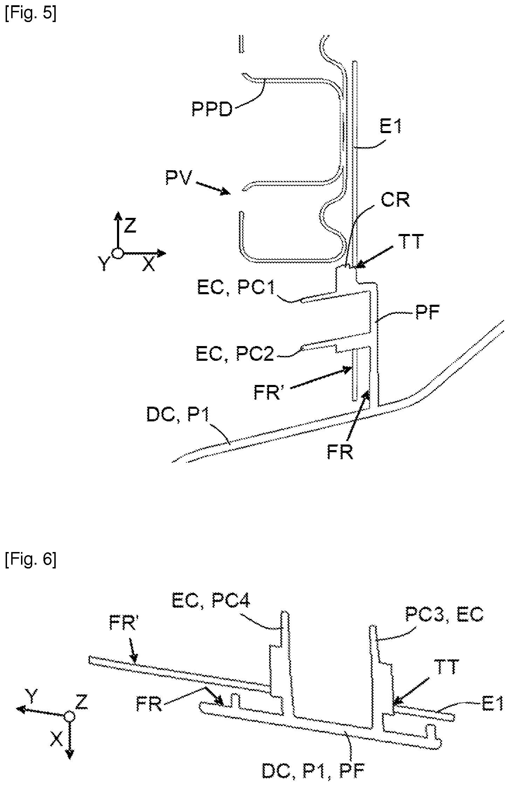

Sur les figures 1 à 6 la direction X est la direction longitudinale du véhicule V, laquelle est parallèle aux côtés latéraux comportant les portières latérales, la direction Y est la direction transversale du véhicule V, laquelle est perpendiculaire à la direction longitudinale X, et la direction Z est la direction verticale du véhicule V, laquelle est perpendiculaire aux directions longitudinale X et transversale Y.

On a schématiquement illustré sur les figures 1, 2 et 5 un exemple de réalisation d'une poutre avant PV selon l'invention, avant qu'elle n'équipe une partie avant d'un véhicule terrestre. Comme illustré, cette poutre avant PV comprend des pieds PPj (j = 1 ou 2) droit et gauche munis chacun d'une embase EP destinée à être solidarisée fixement par vissage à une structure du véhicule, et des extrémités Ej droite et gauche. Lorsque j est égal à 1 son élément est situé du côté longitudinal (ou latéral) droit du véhicule, et lorsque j est égal à 2 son élément est situé du côté longitudinal (ou latéral) gauche du véhicule.

Les extrémités Ej peuvent être des parties terminales droite et gauche d'une pièce principale PPD de la poutre avant PV, propre à être installée transversalement (c'est-à-dire principalement suivant la direction transversale Y) dans la partie avant du véhicule, ou bien peuvent être des pièces qui sont rapportées respectivement sur la face avant des parties terminales droite et gauche de la pièce principale PPD, par exemple par soudage ou vissage, comme illustré non limitativement sur les figures 1, 2 et 5.

Par ailleurs, les pieds PPj peuvent faire partie intégrante de la pièce principale PPD, ou bien peuvent être des pièces qui sont rapportées respectivement sur la face arrière des parties terminales droite et gauche de la pièce principale PPD, par exemple par soudage ou vissage, comme illustré non limitativement sur les figures 1, 2 et 5. L'embase EP de chaque pied PPj est située en retrait de la pièce principale PPD, c'est-à-dire décalée vers l'arrière (suivant la direction longitudinale X).

Dans ce qui suit et ce qui précède les notions « d'avant » et « d'arrière » s'entendent par rapport à l'extrémité avant du véhicule.

La pièce principale PPD est l'élément qui est destiné à encaisser (ou absorber) les chocs au moins partiellement longitudinaux subis par l'avant du véhicule. Les pieds PPj peuvent aussi être agencés de manière à encaisser (ou absorber) les chocs.

Par exemple, un pare-chocs avant (ou un bouclier avant) peut être solidarisé fixement à la poutre avant PV, notamment pour masquer sa pièce principale PPD.

Comme illustré sur les figures 1, 2 et 5, la poutre avant PV comprend aussi au moins un dispositif de canalisation d'air DC couplé à l'une de ses deux extrémités droite E1 et gauche E2. Ce (chaque) dispositif de canalisation d'air DC comprend des parois Pk (ici k = 1 à 5) qui délimitent ensemble un conduit de canalisation d'air CC, par exemple chargé d'alimenter en air un échangeur de chaleur du véhicule. A titre d'exemple, le dispositif de canalisation d'air DC peut être chargé d'alimenter en air un radiateur de refroidissement d'une machine motrice (éventuellement thermique) du groupe motopropulseur du véhicule. Dans ce cas, le dispositif de canalisation d'air DC peut être aussi, éventuellement, solidarisé à une face avant du radiateur de refroidissement (ou échangeur de chaleur).

L'une (P1) des parois Pk du dispositif de canalisation d'air DC comprend un élément de clippage EC qui est propre à être introduit et clippé dans un trou traversant TT que comprend l'extrémité Ej. Ce trou traversant TT est avantageusement dédié, initialement, au passage d'une vis vers l'embase EP d'un pied PPj droit ou gauche de la poutre avant PV, située en retrait, en vue de sa solidarisation à la structure du véhicule. On comprendra que les trous de l'embase EP, qui permettent le passage de vis pour sa solidarisation à la structure du véhicule, sont masqués par l'extrémité Ej correspondante, et donc cette extrémité Ej comprend des trous traversants TT et TT' centrés respectivement sur les axes des trous de l'embase EP et permettant le passage des vis vers ces derniers pendant la phase de solidarisation de la poutre avant PV.

Ainsi, on peut désormais coupler le dispositif de canalisation d'air DC à une extrémité Ej droite ou gauche d'une poutre avant PV, sans utiliser de vis et sans qu'il faille définir un trou dédié supplémentaire dans cette extrémité Ej. Cela permet de faciliter le travail du technicien chargé du couplage sur la chaîne d'assemblage et d'éviter les surcoûts. De plus, comme on ne crée pas localement dans l'extrémité Ej de zone d'affaiblissement (ou d'amorce de rupture), on ne réduit pas la capacité de la poutre avant PV à encaisser (ou absorber) des chocs et donc cette dernière (PV) satisfait totalement aux règles de sécurité en vigueur.

On notera que dans certains véhicules la poutre avant PV peut comprendre deux dispositifs de canalisation d'air DC couplés respectivement à ses deux extrémités droite E1 et gauche E2.

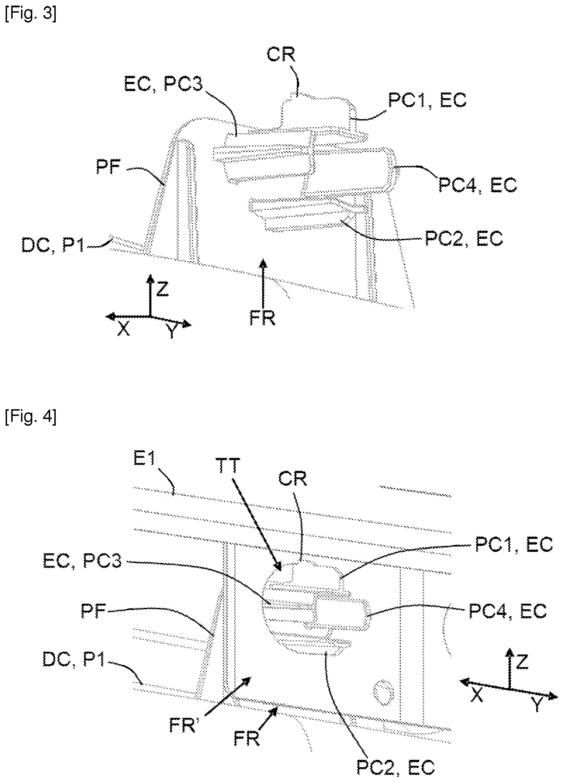

Par exemple, et comme illustré non limitativement sur les figures 3 à 6, l'élément de clippage EC peut comprendre au moins deux pattes PCn qui sont destinées à traverser le trou traversant TT correspondant. Dans ce cas, une première patte PC1 (n = 1) est flexible et comprend un cran CR qui est propre à assurer un clippage derrière le trou traversant TT correspondant (c'est-à-dire au niveau de la face arrière FR' de l'extrémité Ej (ici E1) concernée). De plus, une deuxième patte PC2 (n = 2) est située en regard de cette première patte PC1, en étant décalée par rapport à cette dernière (PC1) d'un secteur angulaire de 180°. Cette deuxième patte PC2 assure un guidage de l'élément de clippage EC lors de la traversée du trou traversant TT correspondant en vue du couplage du dispositif de canalisation d'air DC à l'extrémité Ej correspondante. On comprendra que lorsque l'on introduit l'élément de clippage EC dans le trou traversant TT correspondant, la première patte PC1 se déforme au contact du bord de paroi délimitant ce trou traversant TT afin de permettre le passage de son cran CR, tandis que la deuxième patte PC2 assure le guidage de son élément de clippage EC en glissant sur ce bord de paroi. Le couplage est effectif lorsque le cran CR est passé derrière la face arrière FR' de l'extrémité Ej correspondante (ici E1), et que la première patte PC1 a repris au moins partiellement sa forme initiale (hors contrainte).

On notera, comme illustré non limitativement sur les figures 3 à 6, que l'élément de clippage EC peut aussi, éventuellement, comprendre une troisième patte PC3 (n = 3) décalée par rapport à la première patte PC1 d'un secteur angulaire qui est compris entre 30° et 150°. Cette troisième patte PC3 est destinée à traverser le trou traversant TT et est propre à assurer un guidage complémentaire de l'élément de clippage EC lors de la traversée du trou traversant TT correspondant en vue du couplage du dispositif de canalisation d'air DC à l'extrémité Ej correspondante.

Dans l'exemple illustré non limitativement sur les figures 3, 4 et 6, la troisième patte PC3 est décalée par rapport à la première patte PC1 d'un secteur angulaire égal à 90°. Mais d'autres décalages angulaires peuvent être envisagés.

On notera également, comme illustré non limitativement sur les figures 3 à 6, que l'élément de clippage EC peut aussi, éventuellement, comprendre une quatrième patte PC4 (n = 4) décalée par rapport à la première patte PC1 d'un secteur angulaire qui est compris entre -30° et -150°. Cette quatrième patte PC4 est destinée à traverser le trou traversant TT et est propre à assurer un guidage complémentaire de l'élément de clippage EC lors de la traversée du trou traversant TT correspondant en vue du couplage du dispositif de canalisation d'air DC à l'extrémité Ej correspondante.

Dans l'exemple illustré non limitativement sur les figures 3, 4 et 6, la quatrième patte PC4 est décalée par rapport à la première patte PC1 d'un secteur angulaire égal à -90°. Mais d'autres décalages angulaires peuvent être envisagés.

On notera également que l'une au moins des troisième PC3 et quatrième PC4 pattes peut être flexible afin de faciliter la traversée du trou traversant TT correspondant par l'élément de clippage EC.

On notera également, comme illustré non limitativement sur les figures 1 à 6, que la paroi P1 du dispositif de canalisation d'air DC peut comprendre une patte de fixation PF comportant une face arrière FR comprenant l'élément de clippage EC saillant. Mais dans une variante de réalisation non illustrée l'élément de clippage EC pourrait saillir directement de la paroi P1.

On notera également que le dispositif de canalisation d'air DC peut, par exemple, être réalisé par moulage par injection d'une matière plastique, de préférence rigide et résistante. Cette dernière peut, par exemple, être un polypropylène (ou PP) ou un polyéthylène (ou PE).

On notera également que dans l'exemple illustré les quatre pattes PC1 à PC4 sont indépendantes, car saillantes en quatre endroits de la face arrière FR de la patte de fixation PF, tout en définissant ensemble l'élément de couplage EC. Cela permet de faciliter la réalisation du dispositif de canalisation d'air DC, et plus précisément la réalisation de son éventuel moule, tout comme son démoulage. Mais il pourrait être réalisé sous la forme d'une unique patte de clippage comprenant au moins deux sous-parties similaires à PC1 et PC2.

## Revendications

1. Dispositif de canalisation d'air (DC) propre à être couplé à une extrémité (Ej) droite ou gauche d'une poutre avant (PV) d'un véhicule terrestre, et comportant des parois (Pk) délimitant un conduit de canalisation d'air (CC), **caractérisé en ce que** l'une (P1) desdites parois (Pk) comprend un élément de clippage (EC) propre à être introduit et clippé dans un trou traversant (TT) que comprend ladite extrémité (Ej) et qui est dédié au passage d'une vis vers une embase (EP) d'un pied (PPj) droit ou gauche de ladite poutre avant (PV), située en retrait, en vue d'une solidarisation à une structure dudit véhicule.

2. Dispositif selon la revendication 1, **caractérisé en ce que** ledit élément de clippage (EC) comprend au moins deux pattes (PCn) destinées à traverser ledit trou traversant (TT), et parmi lesquelles une première patte (PC1) est flexible et comprend un cran (CR) propre à assurer un clippage derrière ledit trou traversant (TT) et une deuxième patte (PC2) est située en regard de ladite première patte (PC1), en étant décalée par rapport à cette dernière (PC1) d'un secteur angulaire de 180°, et assure un guidage lors de ladite traversée.

3. Dispositif selon la revendication 2, **caractérisé en ce que** ledit élément de clippage (EC) comprend une troisième patte (PC3) décalée par rapport à ladite première patte (PC1) d'un secteur angulaire compris entre 30° et 150°, destinée à traverser ledit trou traversant (TT) et propre à assurer un guidage lors de ladite traversée.

4. Dispositif selon la revendication 2 ou 3, **caractérisé en ce que** ledit élément de clippage (EC) comprend une quatrième patte (PC4) décalée par rapport à ladite première patte (PC1) d'un secteur angulaire compris entre - 30° et -150°, destinée à traverser ledit trou traversant (TT) et propre à assurer un guidage lors de ladite traversée.

5. Dispositif selon la combinaison des revendications 3 et 4, **caractérisé en ce que** l'une au moins desdites troisième (PC3) et quatrième (PC4) pattes est flexible.

6. Dispositif selon l'une des revendications 1 à 5, **caractérisé en ce que** ladite paroi (P1) comprend une patte de fixation (PF) comportant une face arrière (FR) comprenant ledit élément de clippage (EC).

7. Dispositif selon l'une des revendications 1 à 6, **caractérisé en ce qu'**il est réalisé par moulage par injection d'une matière plastique.

8. Poutre avant (PV) propre à être installée transversalement dans une partie avant d'un véhicule terrestre, et comprenant des pieds (PPj) droit et gauche munis chacun d'une embase (EP) destinée à être solidarisée fixement par vissage à une structure dudit véhicule, et des extrémités (Ej) droite et gauche comportant chacune un trou traversant (TT) dédié au passage d'une vis vers ladite embase (EP) correspondante, située en retrait, en vue de sa solidarisation à ladite structure, **caractérisée en ce qu'**elle comprend en outre un dispositif de canalisation d'air (DC) selon l'une des revendications précédentes, clippé dans un trou traversant (TT) de l'une desdites extrémités (Ej).

9. Poutre avant selon la revendication 8, **caractérisée en ce qu'**elle comprend une pièce principale (PPD) propre à être installée transversalement dans ladite partie avant du véhicule et comprenant des parties terminales auxquelles sont solidarisés lesdits pieds (PPj), et **en ce que** chaque extrémité (Ej) est une pièce rapportée sur l'une desdites parties terminales de la pièce principale (PPD).

10. Véhicule terrestre comprenant une partie avant, **caractérisé en ce que** ladite partie avant comprend une poutre avant (PV) selon la revendication 9.

## Patentansprüche

1. Luftkanalvorrichtung (DC), die geeignet ist, mit einem rechten oder linken Ende (Ej) eines vorderen Trägers (PV) eines Landfahrzeugs gekoppelt zu werden, und die Wände (Pk) aufweist, die einen Luftkanalkanal (CC) begrenzen, **dadurch gekennzeichnet, dass** eine (P1) der Wände (Pk) ein Klemmelement (EC) aufweist, das geeignet ist, in ein Durchgangsloch (TT) eingeführt und geklemmt zu werden, das das Ende (Ej) aufweist, und das dem Durchgang einer Schraube zu einer Basis (EP) eines rechten oder linken Fußes (PPj) des vorderen Trägers (Ej) dient PV), der sich zurückversetzt befindet, um an einer Fahrzeugstruktur befestigt zu werden.

2. Vorrichtung nach Anspruch 1, **dadurch gekennzeichnet, dass** das Klipselement (EC) mindestens zwei Laschen (PCn) umfasst, die dazu bestimmt sind, das Durchgangsloch (TT) zu durchqueren, und von denen eine erste Lasche (PC1) flexibel ist und eine Raste (CR) umfasst, die dazu geeignet ist, hinter dem Durchgangsloch (TT) ein Klipsen zu gewährleisten, und eine zweite Lasche (PC2), die gegenüber der ersten Lasche (PC1) um einen Winkelsektor von 180° versetzt angeordnet ist und eine Führung bei der Durchführung sicherstellt.

3. Vorrichtung nach Anspruch 2, **dadurch gekennzeichnet, dass** das Klipselement (EC) eine dritte Lasche (PC3) aufweist, die gegenüber der ersten Lasche (PC1) um einen Winkelsektor zwischen 30° und 150° versetzt ist, die dazu bestimmt ist, das Durchgangsloch (TT) zu durchqueren, und geeignet ist, eine Führung während des Durchgangs zu gewährleisten.

4. Vorrichtung nach Anspruch 2 oder 3, **dadurch gekennzeichnet, dass** das Klipselement (EC) eine vierte Lasche (PC4) aufweist, die gegenüber der ersten Lasche (PC1) um einen Winkelsektor zwischen -30° und -150° versetzt ist, die dazu bestimmt ist, das Durchgangsloch (TT) zu durchqueren, und geeignet ist, eine Führung während des Durchgangs zu gewährleisten.

5. Vorrichtung nach der Kombination der Ansprüche 3 und 4, **dadurch gekennzeichnet, dass** mindestens einer der dritten (PC3) und vierten (PC4) Ansätze flexibel ist.

6. Vorrichtung nach einem der Ansprüche 1 bis 5, **dadurch gekennzeichnet, dass** die Wand (P1) eine Befestigungslasche (PF) umfasst, die eine Rückseite (FR) aufweist, die das Klipselement (EC) umfasst.

7. Vorrichtung nach einem der Ansprüche 1 bis 6, **dadurch gekennzeichnet, dass** sie durch Spritzgießen eines Kunststoffmaterials hergestellt ist.

8. Vorderer Träger (PV), der in Querrichtung in einem vorderen Teil eines Landfahrzeugs eingebaut werden kann und rechte und linke Füße (PPj) aufweist, die jeweils mit einem Sockel (EP) versehen sind, der dazu bestimmt ist, fest mit einer Struktur des Fahrzeugs verschraubt zu werden, und rechte und linke Enden (Ej), die jeweils ein Durchgangsloch (TT) aufweisen, das dem Durchgang einer Schraube zu dem entsprechenden, zurückgesetzten Sockel (EP) zum Zweck seiner Befestigung an der Struktur gewidmet ist, **dadurch gekennzeichnet, dass** er außerdem eine Luftkanalvorrichtung (DC) nach einem der vorhergehenden Ansprüche aufweist, die in ein Durchgangsloch (TT) eingefangen ist an einem Ende (Ej).

9. Vorderträger nach Anspruch 8, **dadurch gekennzeichnet, dass** er ein Hauptteil (PPD) umfasst, das in Querrichtung in dem vorderen Teil des Fahrzeugs installiert werden kann und Endteile umfasst, an denen die Füße (PPj) befestigt sind, und dass jedes Ende (Ej) ein Teil ist, das an einem der Endteile des Hauptteils (PPD) angebracht ist.

10. Landfahrzeug mit einem vorderen Teil, **dadurch gekennzeichnet, dass** der vordere Teil einen vorderen Balken (PV) nach Anspruch 9 umfasst.

## Claims

1. Air channeling device (DC) adapted to be coupled to a right or left end (Ej) of a front beam (PV) of a land vehicle, and comprising walls (Pk) delimiting an air channeling duct (CC), **characterized in that** one (P1) of said walls (Pk) comprises a clipping element (EC) adapted to be inserted and clipped into a through hole (TT) that said end (Ej) comprises and which is dedicated to the passage of a screw towards a base (EP) of a right or left foot (PPj) of said front beam (PV), located recessed, with a view to being secured to a structure of said vehicle.

2. Device according to claim 1, **characterized in that** the said clipping element (EC) comprises at least two tabs (PCn) intended to pass through the said through-hole (TT), and among which a first tab (PC1) is flexible and comprises a notch (CR) capable of ensuring clipping behind the said through-hole (TT) and a second tab (PC2) is situated opposite the said first tab (PC1), being offset with respect to the latter (PC1) by an angular sector of 180°, and provides guidance during the said passage.

3. Device according to claim 2, **characterized in that** the said clipping element (EC) comprises a third lug (PC3) offset with respect to the said first lug (PC1) by an angular sector of between 30° and 150°, intended to pass through the said through hole (TT) and capable of providing guidance during the said passage.

4. Device according to claim 2 or 3, **characterized in that** the said clipping element (EC) comprises a fourth lug (PC4) offset with respect to the said first lug (PC1) by an angular sector of between -30° and -150°, intended to pass through the said through hole (TT) and suitable for providing guidance during the said passage.

5. Device according to the combination of claims 3 and 4, **characterized in that** at least one of said third (PC3) and fourth (PC4) lugs is flexible.

6. Device according to one of claims 1 to 5, **characterized in that** the said wall (P1) comprises a fixing lug (PF) comprising a rear face (FR) comprising the said clipping element (EC).

7. Device according to one of claims 1 to 6, **characterized in that** it is produced by injection molding a plastic material.

8. A front beam (PV) adapted to be installed transversely in a front part of a land vehicle, and comprising right and left legs (PPj) each provided with a base (EP) intended to be fixedly secured by screwing to a structure of said vehicle, and right and left ends (Ej) each comprising a through hole (TT) dedicated to the passage of a screw towards said corresponding base (EP), located set back, with a view to its securing to said structure, **characterized in that** it further comprises an air channeling device (DC) according to one of the preceding claims, clipped into a through hole (TT) of the one of the ends (Ej).

9. Front beam according to claim 8, **characterized in that** it comprises a main part (PPD) able to be installed transversely in the said front part of the vehicle and comprising end parts to which the said feet (PPj) are secured, and **in that** each end (Ej) is a part added to one of the said end parts of the main part (PPD).

10. Land vehicle comprising a front part, **characterized in that** said front part comprises a front beam (PV) according to claim 9.
